# EUROPEAN PATENT SPECIFICATION

(11) **EP 0 582 821 B1**
(45) Date of publication and mention of the grant of the patent: **13.03.1996**
(21) Application number: 93110306.3
(22) Date of filing: 29.06.1993
(51) Int. Cl.: B60N 2/44

(54) **A back support element for seats, particularly motor-vehicle seats**
Rückenstütze für Sitze, insbesondere für Kraftfahrzeugsitze
Appui dorsal pour sièges, en particulier pour sièges de véhicules automobiles

(30) Priority: 27.07.1992 IT TO920645
(43) Date of publication of application: 16.02.1994
(73) Proprietor: FIAT AUTO S.p.A., I-10135 Torino (IT)
(72) Inventor: Dal Monte, Antonio, I-00196 Roma (IT)
(74) Representative: Bosotti, Luciano

(56) References cited:
- EP-A- 0 420 824
- EP-A- 0 518 830
- DE-C- 3 619 188
- FR-A- 2 596 334
- GB-A- 1 365 348
- GB-A- 2 135 873
- US-A- 4 636 000
- US-A- 5 129 707

## Description

The present invention relates to a back support element for the backrests of seats, for example, motor-vehicle seats, the support element including two complementary portions which are interconnected for pivoting relative to each other about a vertical axis in use, so that the general concavity of the support element is variable, in which:
- a flag-like element associated with each complementary portion has a first end which cooperates in a generally hinged configuration with the outer end, with respect to the seat, of the respective complementary portion so as to be pivotable relative thereto about a substantially vertical axis in use, and a second, free end which can project towards the other complementary portion, and
- operating means associated with the flag-like elements act on the free ends of both flag-like elements in order selectively to move the free ends apart, thus projecting the outer ends of the complementary portions forwards so as to vary the profile of the support element towards a generally more concave configuration.

A back support element of the type specified above is described, for example, in the Applicant's EP-A-0 518 830 (to be taken into consideration under Article 54(3)EPC).

The object of the present invention is to provide a further improvement to the solution described in this prior patent application, particularly as regards the possibility of providing the same transverse restraint for the seat-occupant's body with the use of fewer parts thus achieving a technical simplification which may be beneficial for the purposes of reducing costs.

According to the present invention, this object is achieved by virtue of a back support element having the specific characteristics recited in the characterizing portion of Claim 1.

The invention will now be described, purely by way of non-limiting example, with reference to the appended drawings, in which:
Figure 1 shows schematically a portion of a seat, such as a motor-vehicle seat, in which a support element according to the invention is mounted,
Figures 2 and 3 are two views, a plan view and a lateral rear elevation, respectively, showing the structure of one of the elements illustrated in Figure 1 in greater detail, and
Figure 4 shows a possible variant of the solution according to the invention.

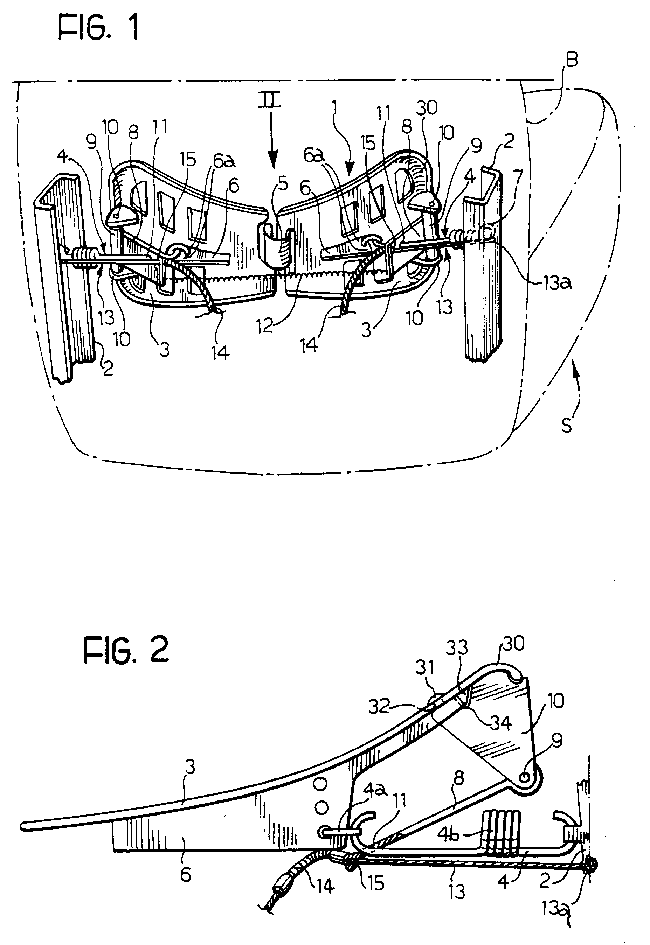

In the drawings, a back support element is generally indicated 1, and is intended to be fitted in the backrest B of a seat such as a motor-vehicle seat S, the profile of which is shown partially in broken outline in Figure 1.

In practice, the element 1 is constituted by a band or strip which extends generally horizontally at the level of the lumbar portion of the back of the person occupying the seat S, and is generally hour-glass- or butterfly-shaped, that is, it is narrowest in its central portion and its depth increases gradually towards its outer ends which face the lateral uprights 2 of the backrest frame.

The element 1 is constituted substantially by two complementary portions 3 which are generally specularly symmetrical with respect to the vertical median plane of the backrest B. Each portion 3 is connected to the respective upright 2 of the backrest by means of a horizontal tie 4 (constituted, in the embodiment illustrated, by a helical spring).

The two portions 3, which are made of rigid material (e.g. metal or rigid plastics) with weight-reducing holes, are hinged together at their mutually-facing inner edges, that is, in correspondence with the vertical median plane of the backrest B, by means of a coupling element 5 constituted, for example, by a sleeve of resilient material (for example, rubber).

This is all according to general principles and for purposes described in greater detail in the Applicant's European patent application EP-A-0 420 824 to which reference may usefully be made for a more detailed description of the structural characteristics of the element 1.

In particular, it can be seen that the hook-shaped inner ends of the springs 4 are hooked onto brackets or fins 6 projecting from the rear faces of the portions 3 which are generally concave towards the front of the backrest B.

More precisely, the brackets 6 have a plurality of holes 6a which can be used selectively for the engagement of the inner ends of the springs 4. The springs 4 are not usually engaged in the holes 6a directly but with the interposition of coupling rings 4a (for example, split metal rings which are inserted in holes 6a and then closed) which in turn form seats for the engagement of the ends of the springs 4.

The arrangement described has the advantage that it enables the springs 4 to be hooked onto the element 1 in several configurations, for example, so that a back support element 1 of the same type can be used for backrests of seats having different dimensions and/or characteristics.

The outer ends (with respect to the seat as a whole), of the springs 4 also have hook-shaped end portions which can be engaged, for example, in generally C-shaped eylets 7 which project from the central portions of the lateral uprights 2 of the backrest.

Two arm-like elements 8 of rigid material (for example, metal or hard plastics) are also mounted on the rear (convex) faces of the portions 3, again generally symmetrically with respect to the vertical median plane of the backrest B, and cooperate with the portions 3 in a generally flag-like configuration.

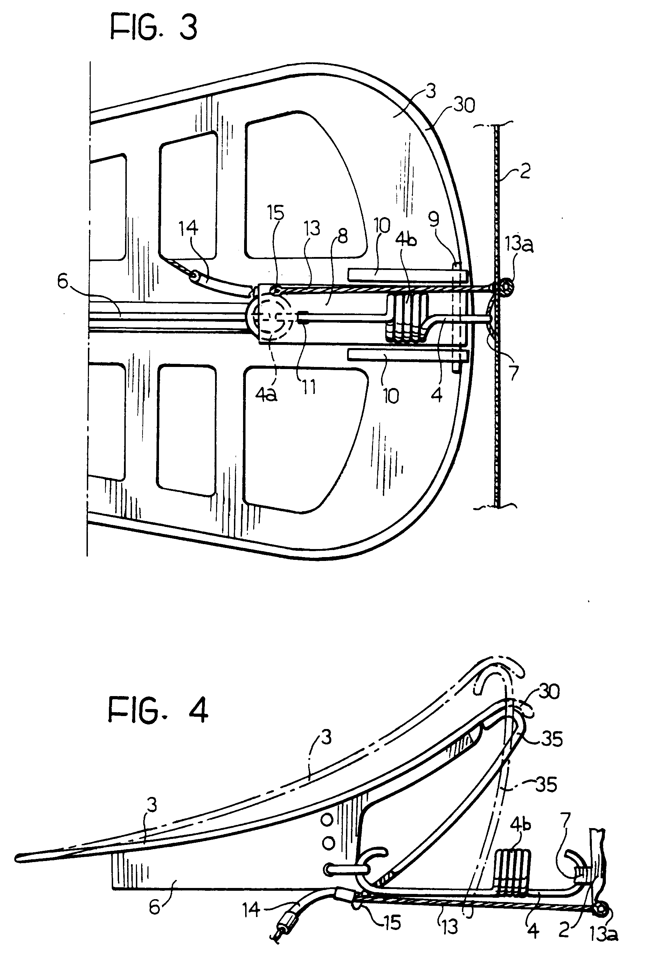

Specifically, in the embodiment of Figures 2 and 3, the outer end (with reference to the seat as a whole) of each flag-like element 8 has a shaft 9 which is approximately vertical and which engages two articulation lugs 10 above and below the flag-like element 8, respectively, so that the flag-like element 8 can pivot generally relative to the respective portion 3 about a vertical axis which corresponds to the axis of the shaft 9. In other words, a kind of hinged coupling is formed between the element 8 and the portion 3.

An important characteristic of the solution according to the invention in the embodiment to which Figures 2 and 3 relate is the general connection arrangement adopted for the articulation lugs 10. As can better be seen in the plan view of Figure 2, in practice, the lugs 10 are configured as two brackets or " flat pieces" which are mounted at the outer ends of the respective portions 3 and, more precisely, in correspondence with a rounded, rearwardly-facing end edge 30. As has been seen, each portion 3 is generally concave at the front, that is, towards the front of the backrest 2. At its outer edges (with respect to the seat as a whole), however, the element 1 has two channel-shaped formations defined by the end edge 30 itself. These channel-shaped formations are open rearwardly at the rear of the element 1 and can thus constitute cavities for housing the articulation lugs 10 for the flag-like elements 8.

In the embodiment to which Figures 2 and 3 refer specifically, the articulation lugs 10 do not constitute integral parts of the respective portions 3 of the element 1. On the contrary, they constitute parts of U-shaped inserts (made of metal or particularly strong plastics material) the end flanges of which define the lugs 10 and the central portions of which are inserted in the channel-shaped cavities defined by the rounded end edges 30. These inserts are fixed to the portions 3, for example, by the engagement of screws or pins 31 (Figure 2) which are inserted (snap-engaged, if appropriate) in corresponding holes 32 in the walls of the portions 3.

The firm connection which can transmit forces between the lugs 10 and the respective portions 3 is preferably further reinforced as a result of the presence of a tooth or rib 33 which projects from the rear wall of each portion 3 and engages a corresponding cavity 34 in the periphery of the articulation lug 10.

Naturally, in a possible alternative embodiment of the invention, the lugs 10 could be formed integrally with the respective portion 3, for example, by moulding in plastics material.

Regardless of the method adopted to form the articulation lugs 10 (separate fitted inserts or co-moulded elements), it can be seen that the rounded edge 30 constitutes a kind of stiffening rib which can absorb the stresses transmitted to the lugs 10 towards the respective portion 3 as a result of the pivoting of the flag-like elements 8 which will be mentioned further below. Moreover, tests carried out by the Applicant have shown that the articulation of the outer ends of the flag-like elements 10 in positions coinciding with the outermost edges of the portions 3 (or possibly even further out, as in the present case: it will be noted from Figure 2 that the shaft 9 is situated further out than the edge 30 with respect to the seat as a whole) is particularly advantageous for achieving the movement which will be described below.

In the variant to which Figure 4 relates, the articulation lugs 10 and the members associated therewith are completely eliminated and, as regards the flag-like elements (in this case indicated 8'), use is made of the presence of the rounded edge 30 and the rearwardly-open cavity defined by the edge to achieve a general connection configuration which may be defined as generally cup-shaped.

More specifically, in the embodiment of Figure 4, the flag-like elements which, in the embodiment of Figures 2 and 3, are of generally rectilinear and flattened shape, have generally rounded outer end portions, indicated 35, which can engage the channel-shaped formations defined by the edges 30.

In the embodiment shown, the rounded outer edge 35 is formed simply by the hook- or crook-like shaping of the plate constituting the flag-shaped element 8' (for example, of bent metal or plastics material moulded to shape). This solution has been found particularly advantageous in terms of simplicity and functional efficiency and also because it can give the element 8' generally resilient characteristics. Naturally variants of the same principle may be considered and put into effect. In particular, it will be appreciated from Figure 4 that the bending operation (actual or theoretical) for forming the rounded end 35 is effected from the outside inwardly (in other words, the tip portion of the hook-shaped free end of the flag-like element 8' is arranged so as to face inwards with respect to the backrest of the seat). It is thus possible to define an axis or position for the pivoting of the flag-like elements 8' relative to the respective portion which is located as far out as possible, with respect to the backrest of the seat : this is all according to the criteria and with the advantages already described above with reference to the embodiment of Figures 2 and 3.

In both the embodiments described, each flag-like element 8, 8' has an opening 11 near its free end for the passage of the spring 4 which connects the respective portion 3 of the support element to the homologous upright 2.

The free ends of the flag-like elements 8, 8' are preferably interconnected by a resilient element 12 (such as a spring, shown only in Figure 1) which acts in a direction such that it biases the two flag-like elements 8, 8' towards each other so as to extend the two portions 3 of the element 1 or move them apart generally at the front. Under the action of the biasing spring 12 alone, the element 1 thus tends spontaneously to adopt the less vertically concave condition to which Figure 1 relates explicitly.

Each of two flexible-cable controls (so-called "Bowden cables"), indicated 13, has a sheath 14 which extends from the centre of the backrest B to the region of the bracket 6 so as to react against the edge of a hole 15 in the respective flag-like element 8, 8' whilst the active element of the control 13 extends outwards relative to the seat so that its end engagement element 13a abuts the upright 2. For this purpose, the upright 2 usually has a slot or hole the edges of which form reaction surfaces for the end element 13a which is constituted by a small ball co-moulded on the end of the cable 13 or by any element fixed firmly to the cable 13.

When the flexible-cable controls 13 are operated (by known means, for example, by means of a manual control lever or a motor, which are not shown since they are not relevant per se for the purposes of an understanding of the invention), as a result of the reaction of the sheaths 14 against the free ends of the flag-like elements 8, 8', the free ends are moved apart towards the uprights 2 so that the flag-like elements 8, 8' cause a generally forward movement of the region (the shaft 9 and the lugs 10 in the embodiment of Figures 2 and 3; the cavities defined by the edge 30 in the embodiment of Figure 4) in which each flag-like element 8, 8' is articulated (an actual hinge in the embodiment of Figures 2 and 3 - a cup-shaped coupling in the embodiment of Figure 4) on the respective portion 3 of the element 1. In practice, this corresponds to a forward movement (shown by a broken outline in Figure 4) of the outer ends of the portions 3, and hence of the support element 1, which thus tends to adopt a more arcuate and concave shape than in its rest position shown in Figure 1.

In these conditions, the backrest can achieve accentuated lateral restraint of the seat-occupant's back substantially as occurs, for example, in the seats of some sports cars.

Naturally, if the flexible-cable controls 13 are slackened, the free ends of the flag-like elements 8, 8' tend to move towards each other, possibly under the biasing force exerted by the spring 12, so that the element 1 tends to return to the less convex position of Figure 1.

In these conditions, particularly when the resilient biasing element 12 is present, the element 1 retains a very good ability to adapt automatically to the dimensions of the seat-occupant's back and to the stresses applied to the backrest B thereby.

It will be appreciated that, in practice, the result described is achieved by virtue of the fact that each of the two portions 3 which constitute the support element 1 is associated with a flag-like element 8, 8' which is connected to the respective portion 3 in a generally hinged arrangement by means of an articulation axis (an actual shaft in the case of the embodiment of Figures 2 and 3, and a nominal axis in the case of the embodiment of Figure 4) which is substantially vertical and is located at the outer edge of the portion 3. This is all so that the movement apart of the free ends of the flag-like elements 8, 8' (and also the sliding connection existing between the elements and the resilient ties 4 which extend through the holes 11) gives rise to a generally forward movement of the coupling region and hence of the outer ends of the portions 3 mentioned above.

In the solution according to the invention, the springs 4 perform a dual function, that is to say, that of connecting the respective portions 3 of the support element 1 to the perimetral structure of the backrest (the lateral upright 2) as well as that of providing guides for the sliding of the respective flag-like elements 8, 8' when the free ends of the elements are pulled outwardly as a result of the traction exerted by means of the flexible-cable control 13.

As each flag-like element 8, 8' moves outwardly it therefore slides along the corresponding spring 4, which acts as a guide. As is clearly shown in Figures 2 to 4, in order to permit this movement, the helical portions 4b of the springs in question occupy only a portion, usually a small portion, of the overall length of each spring 4, generally in the central region with respect to each spring as a whole. The helical portion 4b is generally situated slightly further out than the plane located in the middle of the length of the spring 4 and the rest of the length of the spring is taken up by the two hooked bearing ends for connection to the bracket 6 and to the upright 2, respectively. Naturally, the helical portion 4b is separated from the hook-shaped end which is intended to be connected to the ring 4a (and hence to the bracket 6) by a straight portion, the length of which is equal to the travel envisaged for the sliding movement of the flag-like element 8, 8' relative to the spring 4.

By virtue of the general channel-shaped configuration of the outer edge 30 of the portion 3, it is possible to form, within a generally thin element 1, a very strong structure which can absorb the pressure stresses applied by the flag-like elements either indirectly (by means of the lugs 10 in the embodiment of Figures 2 and 3) or directly (in the case of the cup-shaped coupling of the embodiment of Figure 4).

In a particuarly preferred embodiment, the flag-like element 8' of Figure 4 is formed of a material (for example, a metal such as steel) which has marked resilience characteristics, so that the coupling angle relative to the portion 3 can be varied, by virtue of its resilient flexibility characteristics.

In particular, the use of a resilient flag-like element 8' avoids the need for any biasing elements (such as the springs 12) for preventing the flag-like elements 8 from accidentally reaching and passing a dead-point position during their outward travel (the furthest forward projection of the outer edges of the portions 3) which would prevent them from returning spontaneously towards the closure position shown in Figure 1 simply as a result of the slackening of the flexible-cable controls 13, 13.

## Claims

1. A back support element for the backrests (B) of seats (S), for example, motor-vehicle seats, the support element including two complementary portions (3) which are interconnected (5) for pivoting relative to each other about a vertical axis in use, so that the general concavity of the support element (1) is variable, in which:
- a flag-like element (8, 8') associated with each complementary portion (3) has a first end (9) which cooperates in a generally hinged configuration with the outer end, with respect to the seat, of the respective complementary portion (3) so as to be pivotable relative thereto about a substantially vertical axis in use, and a second free end which can project towards the other complementary portion (3), and
- operating means (13) associated with the flag-like elements (8, 8') act on the free ends of both flag-like elements (8, 8') in order selectively to move the free ends apart, thus projecting the outer ends of the complementary portions (3) forwards so as to vary the profile of the support element (1) towards a generally more concave configuration,
characterised in that the outer end of each complementary portion (3) has a substantially channel-shaped edge (30) for cooperating with the first end of a respective flag-like element (8, 8') in a relationship such that forces can be transmitted.

2. An element according to Claim 1, characterised in that it includes force-transmission means (10) which are hinged on the flag-like elements (8) and fitted within the channel-shaped edge (30).

3. An element according to Claim 2, characterised in that the force-transmission means (10) constitute separate means (31) fitted on the complementary portions (3).

4. An element according to Claim 2, characterised in that the force-transmission means (10) are formed integrally with the complementary portions (3).

5. An element according to any one of the preceding claims, characterised in that the flag-like elements (8) are hinged (10) on the complementary portions (3).

6. An element according to Claim 1, characterised in that the flag-like elements (8') are coupled to the complementary portions (3) in a generally cup-shaped coupling configuration.

7. An element according to Claim 6, characterised in that the flag-like elements (8') are constituted by plate-like bodies each shaped into a generally hook-like configuration so as to form a rounded end (35) for engaging the channel-shaped edge (30).

8. An element according to Claim 7, characterised in that the rounded end (35) is shaped like a hook and its tip faces generally inwards with respect to the seat.

9. An element according to any one of the preceding claims, characterised in that the flag-like elements (8') are resiliently flexible.

10. An element according to any one of the preceding claims, characterised in that it includes resilient means (12) for biasing the free ends of the flag-like elements (8, 8') towards each other against the action of the operating means (13).

11. An element according to any one of the preceding claims, characterised in that the complementary portions (3) are interconnected in correspondence with the vertical median plane of the backrest (B).

12. An element according to any one of the preceding claims, characterised in that the complementary portions (3) are interconnected by means of a generally annular connecting element (5).

13. An element according to any one of the preceding claims, characterised in that it is generally hour-glass- or butterfly-shaped, being narrowest in correspondence with the region of the connection between the complementary portions (3) and increasing gradually in depth towards the outer ends of the complementary portions (3).

14. An element according to any one of the preceding claims, characterised in that the channel-shaped edge is generally rounded in shape.

15. An element according to any one of the preceding claims, characterised in that the operating means (13) comprise at least one flexible-cable control (13, 14).

16. An element according to Claim 15, characterised in that the operating means comprise two flexible cables (13, 14) which act on the flag-like elements (8, 8') in a generally specularly symmetrical arrangement.

17. An element according to Claim 15 or Claim 16, characterised in that said flexible-cable control includes a sheath (13) which bears against the free end of the flag-shaped element (8, 8') in a relationship such that forces can be transmitted.

18. An element according to any one of Claims 15 to 17, characterised in that said flexible-cable control includes an active operating element (13) which abuts (13') a lateral upright (2) of the backrest.

19. An element according to any one of the preceding Claims 15 to 18, characterised in that the flag-like elements (8') have holes (15) through which the active elements of the flexible-cable controls (13, 14) are intended to extend.

20. An element according to any one of the preceding claims, characterised in that it carries associated spring means (4) for supporting the complementary portions (3) on the lateral uprights of the backrest of the seat.

21. An element according to Claim 20, characterised in that the flag-like elements (8') have holes (11) through which the spring means (4) are intended to extend in a configuration such that the spring means (4) define guide formations for the pivoting movement of the flag-like elements (8, 8').

22. An element according to Claim 21, characterised in that said spring means (4) has a central helical portion (4b) as well as at least one substantially straight end portion which is intended to extend slidably through said holes (15) in said flag-like elements (8, 8').

## Patentansprüche

1. Rückenstützelement für die Rückenlehne (B) eines Sitzes (S), z.B. eines Kraftfahrzeugsitzes, wobei das Stützelement zwei einander ergänzende Elemente (3) umfaßt, welche miteinander verbunden sind (5), sodaß sie bei Gebrauch um eine vertikale Achse so zueinander schwenkbar sind, daß die allgemeine Hohlwölbung des Stützelementes (1) variierbar ist, wobei:
- ein jedem Ergänzungselement (3) zugeordnetes klappenartiges Element (8, 8') ein erstes Ende (9) aufweist, welches in einer im allgemeinen scharnierartigen Anordnung mit dem äußeren Ende des entsprechenden Ergänzungselementes (3) so zusammenwirkt, daß es dazu um eine im wesentlichen vertikale Achse schwenkbar ist, und ein zweites freies Ende aufweist, welches zum anderen Ergänzungselement (3) gerichtet sein kann, und
- den klappenartigen Elementen (8, 8') zugeordnete Betätigungsmittel (13) auf die freien Enden beider klappenartigen Elemente (8, 8') so wirken, daß die freien Enden wahlweise auseinanderbewegt und die äußeren Enden der Ergänzungselemente (3) nach vorne gerichtet werden, wodurch das Profil des Stützelementes (1) zu einer im allgemeinen konkaveren Form verändert wird,
dadurch gekennzeichnet, daß das äußere Ende jedes Ergänzungselementes (3) einen im wesentlichen rillenförmigen Rand (30) hat, der mit dem ersten Ende eines entsprechenden klappenartigen Elementes (8, 8') so zusammenwirkt, daS Kräfte übertragen werden können.

2. Element nach Anspruch 1, dadurch gekennzeichnet, daß es Kraftübertragungsmittel (10) umfaßt, welche an den klappenartigen Elementen (8) angelenkt und in den rillenförmigen Rand (30) eingesetzt sind.

3. Element nach Anspruch 2, dadurch gekennzeichnet, daß die Kraftübertragungsmittel (10) getrennte, auf den Ergänzungselementen (3) montierte Mittel (31) bilden.

4. Element nach Anspruch 2, dadurch gekennzeichnet, daß die Kraftübertragungsmittel (10) einstückig mit den Ergänzungselementen (3) ausgebildet sind.

5. Element nach einem der vorhergehenden Ansprüche, dadurch gekennzeichnet, daß die klappenartigen Elemente (8) an den Ergänzungselementen (3) angelenkt (10) sind.

6. Element nach Anspruch 1, dadurch gekennzeichnet, daß die klappenartigen Elemente (8') mit den Ergänzungselementen (3) zu einer allgemeinen Schalenform verbunden sind.

7. Element nach Anspruch 6, dadurch gekennzeichnet, daß die klappenartigen Elemente (8') von im allgemeinen hakenförmigen plattenähnlichen Körpern gebildet sind, sodaß sie ein abgerundetes Ende (35) zum Einrasten in den rillenförmigen Rand (30) bilden.

8. Element nach Anspruch 7, dadurch gekennzeichnet, daß das abgerundete Ende (35) die Form eines Hakens aufweist und seine Spitze in bezug auf den Sitz im allgemeinen nach innen gerichtet ist.

9. Element nach einem der vorhergehenden Ansprüche, dadurch gekennzeichnet, daß die klappenartigen Elemente (8') elastisch biegbar sind.

10. Element nach einem der vorhergehenden Ansprüche, dadurch gekennzeichnet, daß es elastische Mittel (12) umfaßt, um die freien Enden der klappenartigen Elemente (8, 8') gegen die Wirkung der Betätigungsmittel (13) zueinander zu spannen.

11. Element nach einem der vorhergehenden Ansprüche, dadurch gekennzeichnet, daß die Ergänzungselemente (3) entsprechend der vertikalen Mittelebene der Rückenlehne (B) miteinander verbunden sind.

12. Element nach einem der vorhergehenden Ansprüche, dadurch gekennzeichnet, daß die Ergänzungselemente (3) mit Hilfe eines im allgemeinen ringförmigen Verbindungselementes (5) miteinander verbunden sind.

13. Element nach einem der vorhergehenden Ansprüche, dadurch gekennzeichnet, daß es im allgemeinen die Form eines Stundenglases oder eines Schmetterlinges aufweist, wobei es am schmalsten im jenen Bereich ist, in dem die Ergänzungselemente (3) miteinander verbunden sind, und zu den äußeren Enden der Ergänzungselemente (3) hin fortlaufend breiter wird.

14. Element nach einem der vorhergehenden Ansprüche, dadurch gekennzeichnet, daß der rinnenförmige Rand im allgemeinen abgerundet ist.

15. Element nach einem der vorhergehenden Ansprüche, dadurch gekennzeichnet, daß die Betätigungsmittel (13) mindestens einen biegbaren Seilzug (13, 14) umfassen.

16. Element nach Anspruch 15, dadurch gekennzeichnet, daß die Betätigungsmittel zwei biegbare Seilzüge (13, 14) umfassen, die auf die klappenartigen Elemente (8, 8') in einer im allgemeinen spiegelbildlichen, symmetrischen Anordnung wirken.

17. Element nach Anspruch 15 oder Anspruch 16, dadurch gekennzeichnet, daß der biegbare Seilzug eine Hülle (13) umfaßt, welche sich so am freien Ende des klappenartigen Elementes (8, 8') abstützt, daß Kräfte übertragen werden können.

18. Element nach einem der Ansprüche 15 bis 17, dadurch gekennzeichnet, daß der biegbare Seilzug ein aktives Betätigungselement (13) umfaßt, welches an einem seitlichen Steher (2) der Rückenlehne anliegt (13').

19. Element nach einem der vorhergehenden Ansprüche 15 bis 18, dadurch gekennzeichnet, daß die klappenartigen Elemente (8') Öffnungen (15) aufweisen, durch welche sich die aktiven Elemente der biegbaren Seilzüge (13, 14) erstrecken.

20. Element nach einem der vorhergehenden Ansprüche, dadurch gekennzeichnet, daß es zugehörige Federmittel (4) aufweist, die die Ergänzungselemente (3) an den seitlichen Stehern der Rückenlehne des Sitzes stützen.

21. Element nach Anspruch 20, dadurch gekennzeichnet, daß die klappenartigen Elemente (8') Löcher (11) aufweisen, durch welche sich die Federmittel (4) so erstrecken, daß die Federmittel (4) Führungselemente für die Schwenkbewegung der klappenartigen Elemente (8, 8') definieren.

22. Element nach Anspruch 21, dadurch gekennzeichnet, daß die Federmittel (4) einen mittleren spiralförmigen Abschnitt (4b) sowie mindestens einen im wesentlichen geraden Endabschnitt aufweisen, welcher sich beweglich durch die Öffnungen (15) in den klappenartigen Elementen (8, 8') erstreckt.

## Revendications

1. Elément d'appui dorsal pour dossiers (B) de sièges (S), par exemple de sièges de véhicules à moteur, l'élément d'appui comprenant deux parties complémentaires (3) qui sont interconnectées (5) pour pivoter l'une par rapport à l'autre autour d'un axe vertical en utilisation, de manière que la concavité générale de l'élément d'appui (1) soit variable, et dans lequel :
- un élément en drapeau (8, 8') associé à chaque partie complémentaire (3) a une première extrémité (9) qui coopère, dans une configuration générale de charnière, avec l'extrémité extérieure, par rapport au siège, de la partie complémentaire (3) respective de manière à pouvoir pivoter par rapport à celle-ci autour d'un axe sensiblement vertical en utilisation, et une deuxième extrémité, libre, qui peut faire saillie vers l'autre partie complémentaire (3), et
- des moyens d'actionnement (13) associés aux éléments en drapeau (8, 8') agissent sur les extrémités libres des deux éléments en drapeau (8, 8') pour écarter sélectivement les extrémités libres, en projetant ainsi les extrémités extérieures de parties complémentaires (3) vers l'avant, de façon à faire varier le profil de l'élément d'appui (1) vers une configuration sensiblement plus concave,
caractérisé en ce que l'extrémité extérieure de chaque partie complémentaire (3) présente un bord (30) sensiblement en forme de U destiné à coopérer avec la première extrémité d'un élément en drapeau respectif (8, 8') dans une relation telle que les forces puissent être transmises.

2. Elément selon la revendication 1, caractérisé en ce qu'il comprend des moyens de transmission de force (10) qui sont articulés sur les éléments en drapeau (8) et logés dans le bord en forme de U (30).

3. Elément selon la revendication 2, caractérisé en ce que les moyens de transmission de force (10) constituent des moyens séparés (31) agencés sur les parties complémentaires (3).

4. Elément selon la revendication 2, caractérisé en ce que les moyens de transmission de force (10) sont formés en une seule pièce avec les parties complémentaires (3).

5. Elément selon une quelconque des revendications précédentes, caractérisé en ce que les éléments en drapeau (8) sont articulés (10) sur les parties complémentaires (3).

6. Elément selon la revendication 1, caractérisé en ce que les éléments en drapeau (8') sont couplés aux parties complémentaires (3) dans une configuration d'accouplement sensiblement en forme de cuvette.

7. Elément selon la revendication 6, caractérisé en ce que les éléments en drapeau (8') sont constitués par des corps en forme de plaque dont chacun est conformé dans une configuration sensiblement en forme de crochet de manière à former une extrémité arrondie (35) pour attaquer le bord (30) en forme de U.

8. Elément selon la revendication 7, caractérisé en ce que l'extrémité arrondie (35) est conformée comme un crochet et sa pointe est dirigée généralement vers l'intérieur par rapport au siège.

9. Elément selon une quelconque des revendications précédentes, caractérisé en ce que les éléments en drapeau (8') sont élastiquement flexibles.

10. Elément selon une quelconque des revendications précédentes, caractérisé en ce qu'il comprend des moyens élastiques (12) destinés à tendre à rapprocher les extrémités libres des éléments en drapeau (8, 8') l'un de l'autre à l'encontre de l'action des moyens d'actionnement (13).

11. Elément selon une quelconque des revendications précédentes, caractérisé en ce que les parties complémentaires (3) sont interconnectées au niveau du plan médian vertical du dossier (B).

12. Elément selon une quelconque des revendications précédentes, caractérisé en ce que les parties complémentaires (3) sont interconnectées à l'aide d'un élément de liaison (5) sensiblement annulaire.

13. Elément selon une quelconque des revendications précédentes, caractérisé en ce qu'il est sensiblement en forme de sablier ou de papillon, étant le plus étroit au droit de la région de la liaison entre les parties complémentaires (3) et croissant en hauteur vers les extrémités extérieures des parties complémentaires (3).

14. Elément selon une quelconque des revendications précédentes, caractérisé en ce que le bord en forme de U est de forme générale arrondie.

15. Elément selon une quelconque des revendications précédentes, caractérisé en ce que les moyens d'actionnement (13) comprennent au moins une commande à câble flexible (13, 14).

16. Elément selon la revendication 15, caractérisé en ce que les moyens d'actionnement comprennent deux câbles flexibles (13, 14) qui agissent sur les éléments en drapeau (8, 8') dans un agencement sensiblement symétrique comme un objet et son image dans un miroir.

17. Elément selon la revendication 15 ou la revendication 16, caractérisé en ce que ladite commande à câble flexible comprend une gaine (13) qui porte contre l'extrémité libre de l'élément en drapeau (8, 8') dans une relation telle que des forces puissent être transmises.

18. Elément selon une quelconque des revendications 15 à 17, caractérisé en ce que ladite commande à câble flexible comprend un élément d'actionnement actif (13) qui s'appuie (13') contre un montant latéral (2) du dossier.

19. Elément selon une quelconque des revendications précédentes 15 à 18, caractérisé en ce que les éléments en drapeau (8') présentent des trous (15) à travers lesquels les éléments actifs des commandes à câbles flexibles (13, 14) doivent passer.

20. Elément selon une quelconque des revendications précédentes, caractérisé en ce qu'il porte des moyens élastiques associés (4) pour donner appui aux parties complémentaires (3) sur les montants latéraux du dossier du siège.

21. Elément selon la revendication 20, caractérisé en ce que les éléments en drapeau (8') présentent des trous (11) à travers lesquels les moyens à ressort (4) sont destinés à passer dans une configuration telle que les moyens à ressort (4) définissent des formations de guidage pour le mouvement de pivotement des éléments en drapeau (8, 8').

22. Elément selon la revendication 21, caractérisé en ce que ledit moyen à ressort (4) comprend une partie hélicoïdale centrale (4b) ainsi qu'au moins une partie d'extrémité sensiblement droite qui est destinée à passer à coulissement à travers lesdits trous (15) desdits éléments en drapeau (8, 8').
